# EUROPEAN PATENT SPECIFICATION

(11) **EP 0 505 038 B1**
(45) Date of publication and mention of the grant of the patent: **16.12.1998**
(21) Application number: 92301451.8
(22) Date of filing: 21.02.1992
(51) Int. Cl.: H04N 5/44, H01Q 5/00

(54) **Improvements relating to satellite antennas**
Verbesserungen in Bezug auf Satellitenantennen
Améliorations concernant des antennes de satellites

(30) Priority: 22.02.1991 GB 9103713
(43) Date of publication of application: 23.09.1992
(73) Proprietor: AMSTRAD PUBLIC LIMITED COMPANY, Brentwood, Essex CM 14 4EF (GB)
(72) Inventor: Saward, Ian, c/o Amstrad PLC, Brentwood, Essex CM14 4EF (GB)
(74) Representative: Robson, Aidan John

(56) References cited:
- EP-A- 0 190 812
- EP-A- 0 314 930
- DE-A- 3 832 092
- FR-A- 2 591 778
- TELE SATELLITE, no. 13, December 1990, pages 6-7, Paris, FR; D. RENARD: "Un démodulateur Pal/D2MAC universel: Le SAT 2100 MAC 3 de Nokia"
- SIEH FERN, no. 27/90, 7th - 20th July 1990, pages 53-56, Daun/Eifel, DE; "Technisat ST 6000 S"

## Description

This invention relates to television systems and in particular to satellite television receivers and apparatus for use therewith.

One aspect of the invention relates to a satellite receiver decoder and the loading of configuration data required thereby. A further aspect relates to the selection of Low Noise Blocks (LNB's) in an antenna, and another aspect relates to the selection of oscillators within a low noise block of an antenna.

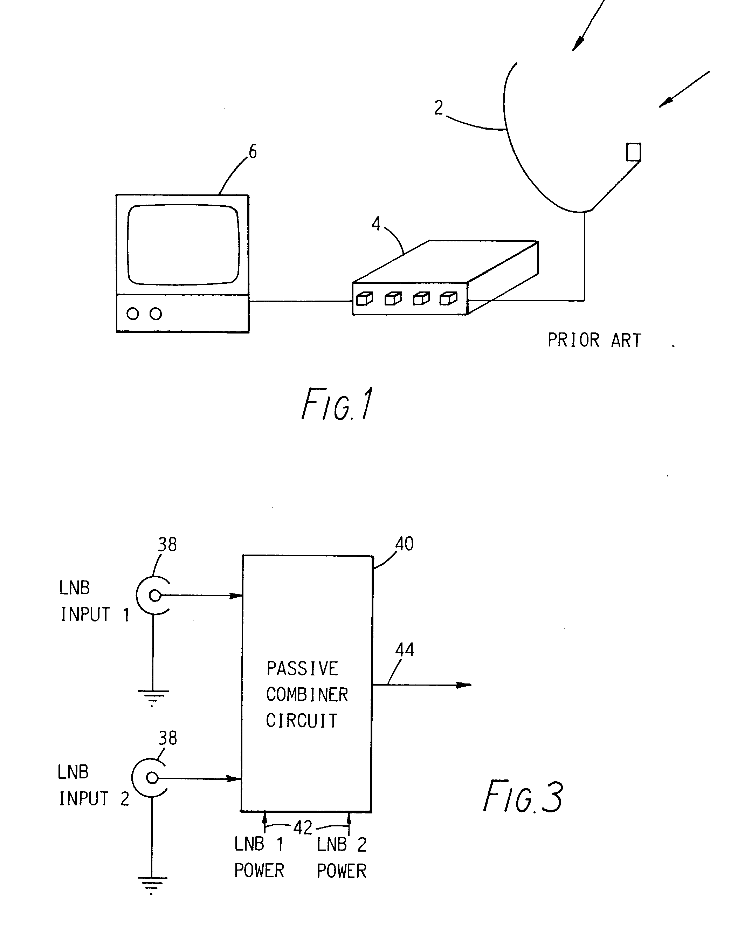

Satellite television systems typically comprise an antenna 2, a satellite TV receiver/decoder 4, and a television set 6 as illustrated in figure 1. The antenna 2 is typically a dish antenna.

A more compact system can be produced by providing the satellite receiver decoder 4 and the television set as a single unit. However, receiver decoders are adapted for use with a particular satellite and thus when provided integrally with a television set 6 that set will only be able to receive signals from a single satellite unless another decoder is provided between the antenna 2 and the combined television receiver/decoder.

An unmotorised satellite dish will typically have two low noise blocks (LNB) which are used to receive signals from, for example, different satellites at different orbital positions without having to move the satellite dish. The LNB selected for signal reception is conventionally selected by a relay at the satellite dish which switches the output leading to the satellite receiver decoder between two LNB's in dependence on a control signal generated at the receiver/decoder. Relays can be unreliable and the energising current needed for the relay coils can cause interference with the received satellite signal.

The signals from the selected LNB are provided to the satellite receiver via a coaxial cable. The main purposes of the coaxial cable in existing installations are:
1. To power the LNB;
2. To select the polarisation of the incoming signal; and
3. To carry the signal from the LNB to the input of the receiver.

1 and 2 above are performed by adding a DC bias to the centre connection of the coaxial connecting lead. A specific voltage is used to select horizontal polarisation, and a different voltage to select vertical polarisation.

The frequency range of a signal input to the satellite receiver/decoder is limited by the bandwidth of the tuner within the receiver. Generally the tuner is responsive to signals from 950MHZ to about 1750MHZ. The actual satellite transmission frequency band received depends upon the oscillator used in the LNB of the antenna. For example, if an oscillator of 10GHZ is used the receiver will receive the frequency band 10950MHZ to 11750MHZ (often referred to as the 11GHZ band) if another frequency band is to be used, for example the 12GHZ band, another oscillator within the LNB must be used or another LNB used. If another oscillator is to be used then some means to select between the oscillators must be provided. This can be by a manual control on the antenna dish which could clearly be awkward to change or by sending another control signal. The coaxial cable is already used to select the polarisation of the incoming signal and putting another control signal over this might interfere with the polarisation selection.

EP-A2-0300173 shows a system in which a DC bias is applied to the coaxial cable to select between oscillators in a receiver.

Preferred embodiments of the present invention seek to overcome these drawbacks of conventional satellite television systems.

The present invention is defined in its various aspects in the appended claims to which reference should now be made.

The invention will now be described in more detail by way of example with reference to the figures in which:
Figure 1 is the prior art device referred to above;
Figure 2 is a block diagram of a satellite receiver/decoder embodying a first aspect of the invention;

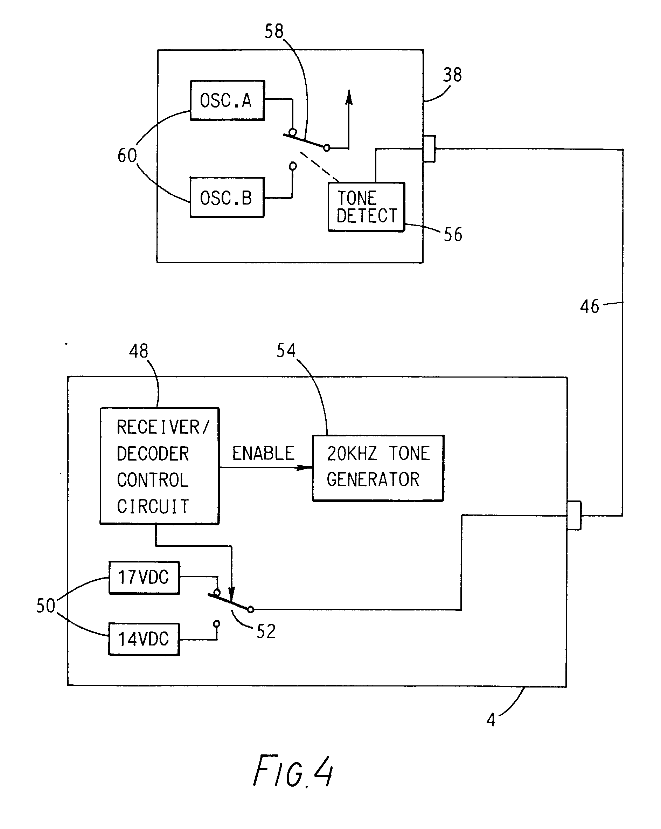

Figure 3 is a block diagram of the LNB input circuitry embodying a second aspect of the invention; and
Figure 4 shows circuitry for selection between different frequency bands embodying a third aspect of the invention.

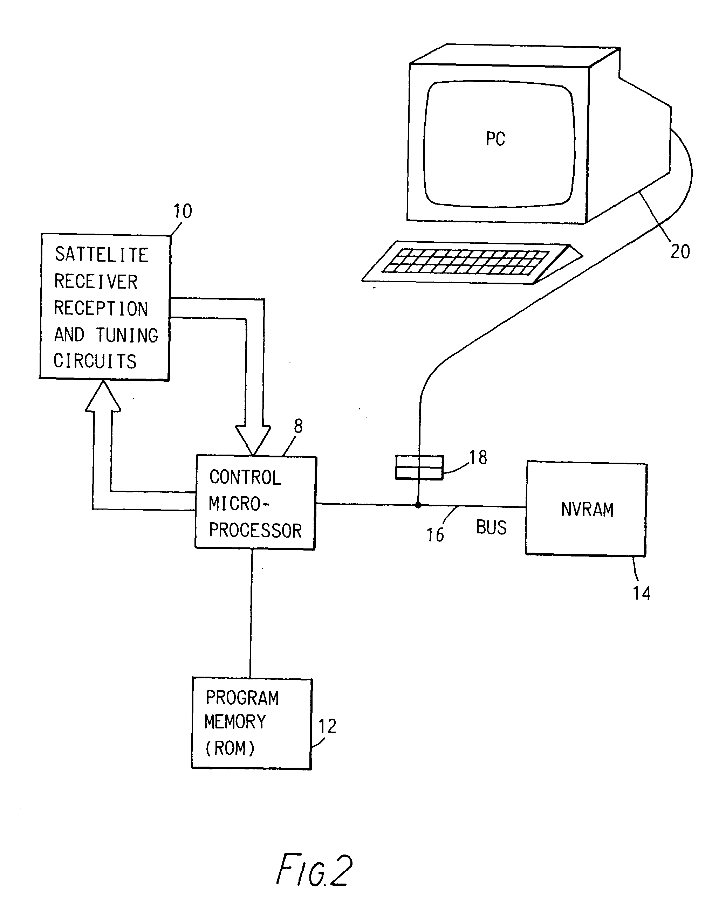

Figure 2 shows a block diagram of the control system for the satellite receiver/decoder 4. This comprises a control microprocessor 8 which sends signals to and receives signals from the satellite receiver/decoder reception and tuning circuits 10. It is also coupled to a program memory ROM 12 and to non-volatile random access memory (NVRAM) 14 via a bus 16. Thus bus 16 also has coupled to it a further access port 18 which may be used to provide additional control and to edit data in the NVRAM 14 under the control of a computer 20.

In order to select a particular channel to be received the control microprocessor 8 must configure various components of the reception and tuning circuits 10 of the receiver/decoder. It must select the antenna expected to receive a signal from a satellite, when more than one antenna is available to the receiver. It must select the correct polarisation,and frequency band, and then synthesise the correct freqency to receive the vision part of the signal. It must then go on to indentify the correct signal type, ie. the scrambling used on the signal, to allow the signal to be decoded and that channel to be viewed. It must also configure the system to receive the correct audio signal.

When the receiver is switched on the information for system configuration is loaded into the NVRAM 14. It is loaded from the program memory 12 which stores all the configuration data to be used by the receiver.

The control microprocessor detects which hardware (e.g. which antenna or antennas and which decoder circuits) is coupled to the satellite receiver/decoder and can thus determine which channels the receiver is arranged to receive. It will then control the loading of data into the NVRAM such that only the channel data appropriate to those channels which can be received via the attached hardware is loaded into the NVRAM 14.

The microprocessor is arranged such that it can read links that are set when the product is manufactured and thereby determine what hardware is coupled to the receiver/decoder. Alternatively the microprocessor can seek to write data to registers that exist in sections of the circuit that may not be present in certain configurations. It then seeks to read back this data and if it is unable to do this assumes that the particular section of the circuit is not present.

As a further alternative, each antenna or decoder circuit is arranged to be responsive to a polling signal generated by the microprocessor to transmit on identification signal back to the microprocessor. The microprocessor can thus detect what hardware is present.

Using this information the control microproceesor then controls the loading of data into the NVRAM in dependence on the channels which the receiver is capable of receiving. This data is then used to send the correct control signals to parts of the circuitry in dependence or the channel being viewed.

The control microprocessor interfaces with the NVRAM by a bus 16. At any time it is possible for device other than the control microprocessor to take over control of this bus via the port 18. This typically takes place during manufacture when a micro computer 20 is coupled to the port 18 and can overwrite data which the NVRAM derived from program memory 12. A user can also reconfigure the NVRAM tuning and channel data under the control of keys provided on the front panel of the receiver/decoder which are linked directly to the microprocessor.

In order to select between different LNB's on a satellite dish so as to receive signals from satellites at different orbital positions the circuitry of figure 5 is used. In this two LNB inputs 38 to a satellite receiver/decoder are shown. These pass to a passive combiner circuit 40. The passive combiner circuit 40 has two power inputs 42 one for each of the LNB's. Applying power to the appropriate one of the power inputs enables signals received via that LNB to be passed to an output 44 of the passive combiner circuit 40 which makes them available to tuning circuits of the satellite receiver. The power is a DC power signal and in the absence of power to an LNB no signal can be received from that LNB. The selection of LNB is made in dependence on the frequency band and channel to be received and a control signal enables power to be supplied to the selected LNB.

Using this type of selection for LNB's is less expensive, more reliable and provides greater isolation from interference than using a relay for LNB selection.

Figure 6 shows how band selection within an LNB is implemented in accordance with the invention. A receiver/decoder 4 is coupled to an LNB 38 via a coaxial cable 46. This provides power to the LNB from the receiver/decoder and carries the signal from the LNB back to the input of the receiver.

Power for the LNB is supplied from one of two power sources 50 one of which supplies 17 volts DC and the other of which supplies 14 volts DC. One of these power sources 50 is selected, via a switch 52 under the control of a receiver decoder control circuit 48. The output of this switch is then coupled to the centre connection of the coaxial cable 46. Selection of one of the power sources 50 will indicate that the incoming signal is vertically polarised whilst selection of the other will indicate that the signal is horizontally polarised. This selection is detected at the LNB 38 by circuitry which is not illustrated in this figure. The implementation of such circuitry will be straightforward to those skilled in the art.

The receiver/decoder control circuit 48 also supplies an ENABLE signal to a 20khz frequency (tone) generator 54. When ENABLE goes high the frequency generator generates a 20khz signal and when ENABLE is low no signal is generated. The output of the frequency generator 54 is coupled to the DC power line leading to the centre connection of the coaxial cable 46.

At the LNB 38 the DC power line is coupled to a frequency detection circuit 56 the output of which controls a switch 58 to select between two oscillators 60 which are designated A and B. In this example the presence of the 20Khz signal will lead to selection of oscillator A and reception of signals in the 11ghz band whilst no signal will lead to selection of oscillator B and reception of signals in the 12ghz band.

Using the arrangement of figure 6 band selection at the LNB 38 on a satellite dish can be easily implemented without the need to provide any additional connections between the receiver/ decoder 4 and the LNB 38.

If a multi level frequency generator and a more complex frequency detection circuit 56 were used in combination with more than two oscillators then one of a plurality of bands could be selected using this arrangement.

Using the high frequency signal superimposed on the DC level between the receiver/decoder and the LNB does not interfere with the DC levels. It also avoids the need to introduce further DC levels in the connection between receiver/decoder and LNB.

When a satellite receiver/decoder has more than one antenna input to which the LNB could be connected the user is advised to connect an LNB with a particular oscillator to a specific input on the receiver/decoder. Information stored in the NVRAM 14 will indicate which bands are available from the selected antenna and LNB input and will display the frequency band selected on a display included in the receiver/decoder.

## Claims

1. A System for selecting one of a plurality of oscillators in a low noise block (LNB) (38) in an antenna (2), the system comprising a receiver and an antenna, the receiver including an input means for receiving a signal from the antenna and characterised by a frequency generating means (54) coupled to the input means and operable in response to a control signal to generate a frequency signal to be applied to the antenna, the antenna including switching means (58) for selecting the oscillator to be used in dependence on the output of the frequency generating means received from the receiver.

2. A System according to claim 1 characterised in that the antenna includes two oscillators (60) and the frequency generating means (54) is operable to produce either no frequency signal or a single frequency signal.

3. A System according to claim 1 characterised in that the antenna includes at least two oscillators (60) and the frequency generating means (54) is operable to produce a different frequency for each oscillator.

4. A System according to claim 1, 2 or 3 characterised by a plurality of Low Noise Blocks (LNB's) in the antenna and means for selecting between LNB's, the selecting means comprising means for generating a control signal in accordance with the LNB to be used and means responsive to the control signal to supply power to the said LNB thereby enabling signals to be received therefrom.

5. A method for selecting one of a plurality of oscillators in a low noise block in an (LNB) antenna (2), characterised by the steps of:
generating a frequency signal in a receiver;
applying the frequency signal to a connection between the receiver and antenna, detecting the frequency at the antenna; and
switching between oscillators in dependence on the received frequency.

6. A receiver for use with an antenna and operable to select between different oscillators in a low noise block in the antenna comprising an input means for receiving a signal from the antenna and characterised by a frequency generating means operable in response to a control signal to apply a frequency signal to the input means to cause a selection between the different oscillators.

7. An antenna including a plurality of oscillators in a low noise block selectively operable for the reception of different signals, characterised by means for switching between oscillators in response to a frequency detection circuit, the frequency detecting circuit being connected to the antenna output means over which frequency signals can be received, the frequency detection circuit being operable to cause the switching means to select between oscillators in dependence on a received frequency signal.

## Patentansprüche

1. System zum Auswählen von einem aus einer Mehrzahl von Oszillatoren in einem rauscharmen Block (LNB) (38) in einer Antenne (2), wobei das System einen Empfänger und eine Antenne umfaßt, wobei der Empfänger einen Eingang zum Empfangen eines Signals von der Antenne aufweist, und gekennzeichnet durch ein Frequenzgenerierungsmittel (54), das mit dem Eingang gekoppelt ist und auf ein Steuersignal damit reagiert, daß es ein Frequenzsignal generiert, das an die Antenne angelegt wird, wobei die Antenne ein Umschaltmittel (58) zum Auswählen des zu verwendenden Oszillators in Abhängigkeit vom Ausgang des von dem Empfänger empfangenen Frequenzgenerierungsmittels aufweist.

2. System nach Anspruch 1, dadurch gekennzeichnet, daß die Antenne zwei Oszillatoren (60) aufweist und das Frequenzgenerierungsmittel (54) die Aufgabe hat, entweder kein Frequenzsignal oder ein einzelnes Frequenzsignal zu erzeugen.

3. System nach Anspruch 1, dadurch gekennzeichnet, daß die Antenne wenigstens zwei Oszillatoren (60) aufweist und das Frequenzgenerierungsmittel (54) die Aufgabe hat, für jeden Oszillator eine andere Frequenz zu erzeugen.

4. System nach Anspruch 1, 2 oder 3, gekennzeichnet durch eine Mehrzahl von rauscharmen Blöcken (LNBs) in der Antenne und ein Mittel zum Auswählen zwischen LNBs, wobei das Auswahlmittel ein Mittel zum Erzeugen eines Steuersignals gemäß dem zu verwendenden LNB und ein Mittel umfaßt, das auf das Steuersignal damit reagiert, daß es dem genannten LNB Strom zuführt, so daß Signale davon empfangen werden können.

5. Verfahren zum Auswählen eines aus einer Mehrzahl von Oszillatoren in einem rauscharmen Block (LNB) in einer Antenne (2), gekennzeichnet durch die folgenden Schritte:
Erzeugen eines Frequenzsignals in einem Empfänger;
Anlegen des Frequenzsignals an eine Verbindung zwischen dem Empfänger und der Antenne, Erfassen der Frequenz an der Antenne; und
Umschalten zwischen Oszillatoren in Abhängigkeit von der empfangenen Frequenz.

6. Empfänger zur Verwendung mit einer Antenne und mit der Aufgabe, zwischen verschiedenen Oszillatoren in einem rauscharmen Block in der Antenne auszuwählen, umfassend einen Eingang zum Empfangen eines Signals von der Antenne und gekennzeichnet durch ein Frequenzgenerierungsmittel, das auf ein Steuersignal damit reagiert, daß es ein Frequenzsignal an den Eingang anlegt, um eine Auswahl zwischen den verschiedenen Oszillatoren zu bewirken.

7. Antenne mit einer Mehrzahl von Oszillatoren in einem rauscharmen Block, der selektiv für den Empfang verschiedener Signale aktiviert werden kann, gekennzeichnet durch ein Mittel zum Umschalten zwischen Oszillatoren in Reaktion auf eine Frequenzerfassungsschaltung, wobei die Frequenzerfassungsschaltung mit dem Antennenausgang verbunden ist, über den Frequenzsignale empfangen werden können, wobei die Frequenzerfassungsschaltung die Aufgabe hat zu bewirken, daß das Umschaltmittel in Abhängigkeit von einem empfangenen Frequenzsignal zwischen Oszillatoren auswählt.

## Revendications

1. Système pour sélectionner l'un d'une pluralité d'oscillateurs dans un bloc à faible bruit (LNB) (38) dans une antenne (2), le système comprenant un récepteur et une antenne, le récepteur comportant un moyen d'entrée pour recevoir un signal à partir de l'antenne et caractérisé par un moyen de génération de fréquence (54) couplé au moyen d'entrée et fonctionnant en réponse à un signal de commande pour générer un signal de fréquence à appliquer à l'antenne, l'antenne comportant un moyen de commutation (58) pour sélectionner l'oscillateur à utiliser en fonction de la sortie du moyen de génération de fréquence reçue à partir du récepteur.

2. Système selon la revendication 1, caractérisé en ce que l'antenne comporte deux oscillateurs (60) et le moyen de génération de fréquence (54) fonctionne pour produit soit aucun signal de fréquence, soit un signal de fréquence unique.

3. Système selon la revendication 1, caractérisé en ce que l'antenne comporte au moins deux oscillateurs (60) et le moyen de génération de fréquence (54) fonctionne pour produire une fréquence différente pour chaque oscillateur.

4. Système selon la revendication 1, 2 ou 3, caractérisé par une pluralité de Blocs à Faible Bruit (LNB) dans l'antenne et un moyen pour sélectionner parmi les LNB, le moyen de sélection comprenant un moyen pour générer un signal de commande conformément au LNB à utiliser et un moyen sensible au signal de commande pour fournir une alimentation audit LNB validant ainsi les signaux devant être reçus à partir de celui-ci.

5. Procédé pour sélectionner une pluralité d'oscillateurs dans un bloc de faible bruit (LNB) dans une antenne (2), caractérisé par les étapes de :
génération d'un signal de fréquence dans un récepteur ;
application du signal de fréquence à une connexion entre le récepteur et l'antenne, en détectant la fréquence à l'antenne ; et
commutation entre les oscillateurs en fonction de la fréquence reçue.

6. Récepteur destiné à être utilisé avec une antenne et fonctionnant pour sélectionner parmi différents oscillateurs dans un bloc à faible bruit dans l'antenne comprenant un moyen d'entrée pour recevoir un signal à partir de l'antenne et caractérisé par un moyen de génération de fréquence fonctionnant en réponse à un signal de commande en vue d'appliquer un signal de fréquence au moyen d'entrée en vue de causer une sélection parmi les différents oscillateurs.

7. Antenne comportant une pluralité d'oscillateurs dans un bloc à faible bruit fonctionnant sélectivement pour la réception de signaux différents, caractérisée par un moyen pour commuter entre les oscillateurs en réponse à un circuit de détection de fréquence, le circuit de détection de fréquence étant connecté au moyen de sortie d'antenne sur lequel les signaux de fréquence peuvent être reçus, le circuit de détection de fréquence fonctionnant pour causer la sélection par le moyen de commutation entre les oscillateurs en fonction d'un signal de fréquence reçu.
